# EUROPÄISCHE PATENTSCHRIFT

(11) **EP 3 864 065 B1**
(45) Veröffentlichungstag und Bekanntmachung des Hinweises auf die Patenterteilung: **21.02.2024**
(21) Anmeldenummer: 19783339.5
(22) Anmeldetag: 11.10.2019
(51) Int. Cl.: C08G 18/80, C09D 175/04, C08G 18/28, C08G 18/42, C09J 175/04, C08G 18/34

(54) **VERFAHREN ZUM VERKLEBEN VON SUBSTRATEN**
HEAT-RELEASABLE REACTIVE ADHESIVES
ADHÉSIFS RÉACTIFS THERMIQUEMENT SOLUBLES

(30) Priorität: 12.10.2018 EP 18200018
(43) Veröffentlichungstag der Anmeldung: 18.08.2021
(73) Patentinhaber: Evonik Operations GmbH, 45128 Essen (DE)
(72) Erfinder: KOLB, Nicolai, 45665 Recklinghausen (DE); BRENNER, Gabriele, 48249 Dülmen (DE); SCHLEIMER, Bernhard, 45770 Marl (DE)
(74) Vertreter: Evonik Patent Association
(86) Internationale Anmeldenummer: PCT/EP2019/077595
(87) Internationale Veröffentlichungsnummer: WO 2020/074702

(56) Entgegenhaltungen:
- EP-A1- 2 695 902
- WO-A1-2017/044726
- US-A- 4 006 122
- US-A1- 2017 101 565

## Beschreibung

Die vorliegende Erfindung betrifft ein Verfahren zum Verkleben von Substraten, wobei es sich bei der Verklebung um eine Verklebung handelt, die durch eine Wärmebehandlung mit einer Temperatur von 50 °C bis kleiner 200 °C lösbar ist und zur Herstellung der Verklebung eine Zusammensetzung, enthaltend ein Polymer der Formel (I),

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren, x größer-gleich 1, R¹ = R² oder O-R³, R² = Kohlenwasserstoffrest, der mit Halogenatomen substituiert sein kann, mit 1 bis 10 Kohlenstoffatomen, R³ = Kohlenwasserstoffrest, der mit Halogenatomen substituiert sein kann, mit 1 bis 10 Kohlenstoffatomen, oder Polymerrest, R` = -H, Kohlenwasserstoffrest, der mit Halogenatomen substituiert sein kann, mit 1 bis 10 Kohlenstoffatomen, oder ein Rest der Formel (II),

-C(O)-NH-Q' (II)

mit
Q' = organischer Rest, der auch ein oder mehrere Silizium-Atome aufweisen kann, R" = -H oder ein Rest der Formel (II), mit der Maßgabe, dass wenn keiner der Reste R` und R" ein Rest der Formel (II) ist, mindestens einer der Reste R` oder R" -H ist, eingesetzt wird.

Reaktive Polyurethanklebstoffe - sowohl feuchtigkeitshärtende 1-Komponenten als auch 2-Komponenten Klebstoffe - werden in vielen industriellen Verfahren genutzt, wo besonders hohe Anforderungen an die Verklebung gestellt werden. Insbesondere bzgl. der thermischen Stabilität (Wärmestandfestigkeit) zeigen vernetzte Polyurethanklebstoffe hervorragende Eigenschaften.

Eine aktuelle legislative Vorgabe ist allerdings, dass gefügte Bauteile (geklebte Produkte) nach dem Lebenszyklus wieder recycelt werden oder für Reparaturzwecke, ohne gravierende Beschädigung der Bauteile, getrennt werden können - beispielsweise elektronische Geräte wie Mobiltelefone oder Displays. Für ein solches Recycling oder Trennen müsste der Klebstoff "auf Befehl" lösbar sein (De-Bonding on Demand, abgekürzt DBD).

Ein üblicher Ansatz für De-Bonding on Demand ist der Eintrag von Temperatur, wodurch die Adhäsion und/oder die Kohäsion beeinflusst werden. Hier gibt es diverse Ansätze, beispielsweise das Zufügen eines nicht-reaktiv eingebauten Harzes in die Klebstoffformulierung, welches bei Temperaturen über dem Erweichungspunkt den Klebstoff "aufweicht" und entsprechend die Kohäsion verringert (WO2016/000222). Dieser Ansatz ist allerdings nachteilig, da die nicht-reaktiv eingebauten Polymere üblicherweise zu einer geringeren Kohäsion des Klebstoffs auch bei niedrigeren Temperaturen während der Nutzungsphase/-dauer führen. Sie können die Chemikalienbeständigkeit beeinträchtigen, herausgewaschen werden oder zu unerwünschter Migration führen.

In Macromolecules, 2018, 51 (3), Seiten 660 - 669 wird das Umsetzungsprodukt eines Acetoacetoxy-Acrylesters mit einem geblockten Isocyanat beschrieben, um einen thermolabilen, strahlenvernetzbaren Crosslinker zu erhalten, der strahlenhärtende Klebstoff auf Befehl (durch Einwirkung von Wärme) lösbar macht. Da hier allerdings keine freien Isocyanatgruppen mehr vorhanden sind, ist die Verwendung dieser Technologie für reaktive feuchtigkeitshärtende PU-Klebstoffe nicht möglich.

Dass auch Malonat-haltige Polyester mit Isocyanaten reagieren können, um Polyester mit thermisch labilen Bindungen zu erhalten, wird beispielsweise in der US 4,006,122 beschrieben. Eine Verwendung solcher Polymere in Klebstoffen findet hier allerdings keine Erwähnung. Ebenso wird keine Härtung der Isocyanate über Feuchtigkeit erwähnt, die für reaktive feuchtigkeitshärtende PU-Klebstoffe essentiell ist.

Aufgabe der vorliegenden Erfindung war entsprechend die Bereitstellung von reaktiven (Polyurethan-basierten) Schmelzklebstoffen mit einer de-bonding on demand Funktion.

Überraschenderweise wurde gefunden, dass der Einsatz einer Zusammensetzung, enthaltend ein Polymer der Formel (I),

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren, x größer-gleich 1, R¹ = R² oder O-R³, R² = Kohlenwasserstoffrest, der mit Halogenatomen substituiert sein kann, mit 1 bis 10 Kohlenstoffatomen, R³ = Kohlenwasserstoffrest, der mit Halogenatomen substituiert sein kann, mit 1 bis 10 Kohlenstoffatomen, oder Polymerrest, R` = -H, Kohlenwasserstoffrest, der mit Halogenatomen substituiert sein kann, mit 1 bis 10 Kohlenstoffatomen, oder ein Rest der Formel (II),

-C(O)-NH-Q' (II)

mit
Q' = organischer Rest, der auch ein oder mehrere Silizium-Atome aufweisen kann, R" = -H oder ein Rest der Formel (II), mit der Maßgabe, dass wenn keiner der Reste R` und R" ein Rest der Formel (II) ist, mindestens einer der Reste R` oder R" -H ist, diese Aufgabe löst.

Gegenstand der vorliegenden Erfindung ist deshalb ein Verfahren wie in den Ansprüchen sowie in der nachfolgenden Beschreibung definiert.

Die erfindungsgemäß eingesetzten Zusammensetzungen haben den Vorteil, dass aus Ihnen erzeugte Klebstoffformulierungen zu Verklebungen führen, die durch Einwirkung von Wärme, insbesondere von Temperaturen kleiner 200 °C lösbar sind.

Weiterhin haben die erfindungsgemäß eingesetzten Zusammensetzungen den Vorteil, dass die thermisch labilen Bindungsstellen im Polymernetzwerk reaktiv eingebaut sind, und somit kein Verlust der mechanischen Eigenschaften (bsp. Kohäsion) im ausgehärteten Klebstoff in der Nutzungsphase erfolgt, wie es bei der Zugabe von nicht-reaktiven Additiven der Fall wäre.

Das erfindungsgemäße Verfahren wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Das erfindungsgemäße Verfahren zum Verkleben von Substraten, zeichnet sich dadurch aus, dass es sich bei der Verklebung um eine Verklebung handelt, die durch eine Wärmebehandlung mit einer Temperatur von 50 °C bis kleiner 200 °C lösbar ist und zur Herstellung der Verklebung eine Zusammensetzung, enthaltend ein Polymer der Formel (I),

Q-(O-C(O)-CR'R"-C(O)-R¹)ₓ (I)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
   R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R` = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),

   -C(O)-NH-Q' (II)

   mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 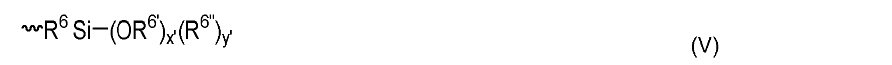
mit R⁶, gleich Kohlenwasserstoffrest, der auch Stickstoff, Schwefel und/oder Sauerstoff aufweisen kann, bevorzugt Kohlenwasserstoffrest der kein Stickstoff, Schwefel oder Sauerstoff aufweist, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
mit der Maßgabe, dass wenn keiner der Reste R` und R" ein Rest der Formel (II) ist, mindestens einer der Reste R` oder R" -H ist, eingesetzt wird.

In dem Polymer der Formel (I) ist Q vorzugsweise ein Polyesterrest, der bevorzugt auf Di- und/oder Polysäuren und Di- und/oder Polyolen basiert. Bevorzugt ist Q ein Polyesterrest, der auf Disäuren und Diolen basiert.

Polymere der Formel (I), bei denen R' und R" gleich -H ist, können durch Umsetzung von OH-terminierten Polyestern oder OH-terminierten Polyolefinen mit Malonsäure, Malonsäuremonoester oder Malonsäurediestern, vorzugsweise Marlonsäurediemethyl- oder Malonsäuredieethylestern oder mit beta-Ketoestern der Formel (IV)

R⁴-O-C(O)-CR'R"-C(O)-R⁵ (IV)

mit R' und R" = -H und R⁴ und R⁵ gleiche oder verschiedene Kohlenwasserstoffreste, die mit Halogenatomen substituiert sein können, mit 1 bis 10 Kohlenstoffatomen, vorzugsweise mit 1 bis 7 Kohlenstoffatomen und bevorzugt mit 1 bis 4 Kohlenstoffatomen, erhalten werden. Besonders bevorzugte Verbindungen der Formel (IV) sind Methyl- oder Ethyl-2-acetoacetat.

Bevorzugt erfolgt die Umsetzung der OH-terminierten Polyester oder OH-terminierten Polyolefine mit Malonsäure, Malonsäuremonoester oder Malonsäurediestern, vorzugsweise Marlonsäurediemethyl- oder Malonsäuredieethylestern oder mit beta-Ketoestern der Formel (IV)

R⁴-O-C(O)-CR'R"-C(O)-R⁵ (IV)

mit R' und R" = -H und R⁴ und R⁵ gleiche oder verschiedene Kohlenwasserstoffreste, die mit Halogenatomen substituiert sein können, mit 1 bis 10 Kohlenstoffatomen, vorzugsweise mit 1 bis 7 Kohlenstoffatomen und bevorzugt mit 1 bis 4 Kohlenstoffatomen, vorzugsweise katalysiert, bevorzugt mit Titan- oder Zinn-Katalysatoren. Bevorzugt wird als Titan aufweisender Katalysator eine organische Titan(IV)-verbindung, beispielsweise Titan(IV)-alkoholat, Titan(IV)-carboxylat oder Titan(IV)-acetylacetonat eingesetzt. Bevorzugt handelt es sich bei der Titan(IV)-verbindung um ein Titan(IV)-alkoholat, wobei es vorteilhaft sein kann, wenn es sich bei dem Liganden um ein zweizähniges Diol handelt. Beispiele bevorzugter Titan(IV)-verbindungen sind Titantetramethanolat, Titantetraethanloat, Titantetrapropylat, Titantetraisopropylat, Titantetra-n-butylat, Titantetra-t-butylat, Titantetraphenylat, Titanoxidacetylacetonat, Titanacetylacetonat sowie Titandialkoholate basierend auf Diolen.

Als OH-funktionalisierte, bevorzugt OH-terminierte Polyester oder OH-funktionalisierte, bevorzugt OH-terminierte Polyolefine können alle bekannten entsprechenden Polymere eingesetzt werden.

Als OH-funktionalisierte, bevorzugt OH-terminierte Polyester werden vorzugsweise solche mit einer Funktionalität von mindestens 1, vorzugsweise 1 bis 100, bevorzugt 2 bis 20 und besonders bevorzugt 3 bis 10 eingesetzt, die vorzugsweise mindestens ein Di- oder Polyol und mindestens eine Di- oder Polycarbonsäure enthalten. Im Hinblick auf die Polyole und Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Unter Polycarbonsäuren sind Verbindungen zu verstehen, die mehr als eine und bevorzugt zwei oder mehr Carboxylgruppen tragen. Unter Carboxyfunktionalitäten werden im Sinne der vorliegenden Erfindung auch deren Derivate, beispielsweise Ester oder Anhydride, verstanden.

Bei den Polycarbonsäuren kann es sich vorzugsweise um aromatische oder um gesättigte oder ungesättigte aliphatische oder gesättigte oder ungesättigte cycloaliphatische Di- oder Polycarbonsäuren handeln. Bevorzugt werden Dicarbonsäuren eingesetzt. Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid. Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure, Korksäure, Azelainsäure, Dimethylazelat, Sebacinsäure, Dimethylsebacat, Undecandicarbonsäure, 1,10-Decandicarbonsäure, 1,12-Dodecandicarbonsäure, Brassylsäure, 1,14-Tetradecandicarbonsäure, 1,16-Hexadecandisäure, 1,18-Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid. Beispiele gesättigter cycloaliphatischer Di- und/oder Polycarbonsäuren umfassen Derivate von 1,4-Cyclohexandicarbonsäuren, 1,3-Cyclohexandicarbonsäuren und 1,2-Cyclohexandicarbonsäuren.

Die Art der für die Herstellung der Polyester eingesetzten Polyole ist an sich beliebig. Unter Polyolen sind Verbindungen zu verstehen, die mehr als eine und bevorzugt zwei oder mehr Hydroxylgruppen tragen. So können lineare oder verzweigte aliphatische und/oder cycloaliphatische und/oder aromatische Polyole enthalten sein.

Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol, Polyethylenglykol, Polypropylenglykol und Mischungen daraus. Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.

Bevorzugt werden bifunktionelle Diole und Dicarbonsäuren eingesetzt.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

Besonders bevorzugt ist Q ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol basiert. Ganz besonders bevorzugt ist Q ein Polyesterrest, der zu mindestens 50 Gew.-% bevorzugt 75 Gew.-% und besonders bevorzugt 95 Gew.-% bezogen auf den Polyesterrest, auf den genannten Polysäuren und Polyolen, bevorzugt Adipinsäure und Hexandiol basiert.

In dem Polymer der Formel (I) ist R³ vorzugsweise ein Polyesterrest, der bevorzugt auf Di- und/oder Polysäuren und Di- und/oder Polyolen, besonders bevorzugt auf Disäuren und Diolen basiert. Bevorzugt ist R³ ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert. Ganz besonders bevorzugt ist R³ ein Polyesterrest, der zu mindestens 50 Gew.-% bevorzugt 75 Gew.-% und besonders bevorzugt 95 Gew.-% bezogen auf den Polyesterrest, auf den genannten Polysäuren und Polyolen, bevorzugt auf Adipinsäure und Hexandiol basiert.

Ist Q' ein Polyesterrest, so basiert Q' vorzugsweise auf Di- und/oder Polysäuren und Di- und/oder Polyolen, bevorzugt auf Disäuren und Diolen. Besonders bevorzugt ist Q' ein Polyesterrest, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert. Ganz besonders bevorzugt ist Q' ein Polyesterrest, der zu mindestens 50 Gew.-%, bevorzugt 75 Gew.-% und besonders bevorzugt 95 Gew.-% bezogen auf den Polyesterrest, auf den genannten Polysäuren und Polyolen, bevorzugt auf Adipinsäure und Hexandiol basiert.

Die Synthese der Polyester erfolgt bevorzugt über eine Schmelzekondensation. Hierzu werden die vorab genannten Di- oder Polycarbonsäuren und Di- oder Polyole im Äquivalentverhältnis von Hydroxyl- zu Carboxylgruppen von 0.5 bis 1.5, bevorzugt 1.0 bis 1.3, vorgelegt und aufgeschmolzen. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder -zinnverbindungen wie Tetrabutyltitanat oder Dibutylzinnoxid. Denkbar sind auch Katalysatoren, die auf anderen Metallen wie z. B. Zink oder Antimon basieren, sowie metallfreie Veresterungskatalysatoren. Weiterhin sind weitere Additive und Fahrhilfsmittel wie Antioxidantien oder Farbstabilisatoren möglich.

Die OH-terminierten Polyester weisen vorzugsweise eine Säurezahl, bestimmt nach DIN EN ISO 2114, zwischen 0 und 10 mg KOH/g, vorzugsweise 0 bis 3 mg KOH/g, insbesondere 0 bis 1 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Die OH-terminierten Polyester weisen vorzugsweise eine OH-Zahl, bestimmt nach DIN 53240-2, zwischen 1 bis 250 mg KOH/g, besonders bevorzugt zwischen 5 und 100 mg KOH/g auf.

Als OH-funktionalisiertes Polyolefin, vorzugsweise OH-terminiertes Polyolefin wird bevorzugt ein OH-funktionalisiertes Polybutadien, bevorzugt ein OH-terminiertes Polybutadien verwendet.

Das zahlenmittlere Molekulargewicht, bestimmt durch Gelpermeationschromatographie, der hydroxyterminierten Polybutadiene beträgt vorzugsweise von 500 bis 10.000 g/mol, bevorzugt von 1.000 bis 5.000 g/mol und besonders bevorzugt von 1.500 und 4.000 g/mol. OH-terminierte Polybutadien kann in einer teilweise oder vollständig hydrierten Form vorliegen. Vorzugsweise wird unhydriertes OH-funktionalisiertes Polybutadien, bevorzugt OH-terminiertes Polybutadien verwendet.

Die erfindungsgemäß eingesetzten hydroxy funktionalisierten, bevorzugt hydroxy-terminierten Polybutadiene werden vorzugsweise mittels radikalischer Polymerisation, beispielsweise durch Polymerisation von 1,3-Butadien in Anwesenheit von Wasserstoffperoxid, Wasser und einem organischen Lösungsmittel hergestellt. Geeignete Verfahren sind beispielsweise in EP 2 492 292 beschrieben.

Die im Rahmen der vorliegenden Erfindung vorzugsweise einsetzbaren Polybutadiene sind kommerziell erhältlich, beispielsweise als POLYVEST^{®} HT von der Evonik Resource Efficiency GmbH.

Die Funktionalität der eingesetzten OH-funktionalisierten, bevorzugt OH-terminierten Polyolefine, bevorzugt Polybutadiene, welche auch anteilig oder vollständig hydriert vorliegen können, vorzugsweise aber unhydriert sind, liegt vorzugsweise im Bereich von 1,8 bis 5, bevorzugt im Bereich von 2 bis 3,5, und insbesondere bevorzugt im Bereich von 2 bis 3.

Es kann vorteilhaft sein, wenn in der erfindungsgemäß eingesetzten Zusammensetzung kein Polymer der Formel (I) vorhanden ist, bei dem keiner der Reste R` und R" im Polymer der Formel (I) der Formel (II) entspricht und in der Zusammensetzung eine Verbindung der Formel (III)

O=C=N-Q' (III)

mit Q` wie oben definiert, vorzugsweise Q' ein Polyolefin- und/oder Polyester-Rest, enthalten ist. Bei einer solchen Zusammensetzung kann es sich um eine Zusammensetzung handeln, die als Vorprodukt einer Klebstoffformulierung eingesetzt werden kann.

Es kann vorteilhaft sein, wenn in der erfindungsgemäß eingesetzten Zusammensetzung mindestens einer der Reste R` und R", vorzugsweise beide Reste R` und R" im Polymer der Formel (I) der Formel (II) entspricht und in der Zusammensetzung zusätzlich eine Verbindung der Formel (III)

O=C=N-Q' (III)

mit Q` wie oben definiert, vorzugsweise mit Q' ein Polyolefin- und/oder Polyester-Rest, enthalten ist. Bei einer solchen Zusammensetzung kann es sich um eine Zusammensetzung handeln, die direkt als Klebstoffformulierung eingesetzt werden kann.

Auch kann es vorteilhaft sein, wenn in der erfindungsgemäß eingesetzten Zusammensetzung mindestens einer der Reste R` und R", vorzugsweise beide Reste R` und R" im Polymer der Formel (I) der Formel (II) entspricht und in der Zusammensetzung keine Verbindung der Formel (III)

O=C=N-Q' (III)

mit Q` wie oben definiert, vorzugsweise mit Q' ein Polyolefin- und/oder Polyester-Rest, enthalten ist. Bei einer solchen Zusammensetzung kann es sich um eine Zusammensetzung handeln, die direkt als Klebstoffformulierung eingesetzt werden kann oder eine ausgehärtete Klebstoffformulierung (Verklebung) ist.

Polymere der Formel (I), bei denen mindestens einer der Reste R` und R", vorzugsweise beide Reste R` und R" im Polymer der Formel (I) der Formel (II) entsprechen, können durch Umsetzung von Polymeren der Formel (I), bei denen mindestens einer oder vorzugsweise beide der Reste R` und R" gleich -H sind, mit einer Verbindung der Formel (III) erhalten werden. Bevorzugt einsetzbare Verbindungen der Formel (III) können z.B. durch Umsetzung von OH-terminierten Polyestern oder OH-terminierten Polyolefinen mit einer Di- oder Polyisocyanatverbindung, bevorzugt Diisocyanatverbindung erhalten werden. Die Umsetzung der OH-modifizierten Polymere mit Polyisocyanaten kann wie im Stand der Technik, so z. B. in WO2016139144, WO2016034394 oder WO2005090428, beschrieben erfolgen.

Als OH-terminierte Polyester oder OH-terminierte Polyolefine werden vorzugsweise die oben beschrieben eingesetzt.

Geeignete Isocyanatverbindung sind vorzugsweise 4,4'-Diphenylmethandiisocyanat, 2,4'-Diphenylmethandiisocyanat, Toluoldiisocyanat-Isomere, Isophorondiisocyanat, Hexamethylendiisocyanat, 4,4'-Dicyclohexylmethandiisocyanat oder Mischungen daraus, bevorzugt 4,4'-Diphenylmethandiisocyanat oder eine Mischung aus 4,4'-Diphenylmethandiisocyanat und 2,4'-Diphenylmethandiisocyanat.

Neben den Polymeren der Formel (I) und optional den Verbindungen der Formel (III), können die Zusammensetzungen weitere für Klebstoffformulierungen übliche Hilfsstoffe aufweisen, wie z.B. nicht OH-funktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente; Tackifier, wie. z. B. Kolophoniumharze, Kohlenwasserstoffharze, Phenolharze sowie Alterungsschutz- und Hilfsmittel. Der Anteil an Hilfsstoffen an der erfindungsgemäß eingesetzten Zusammensetzung kann bis zu 50 Gew.-%, vorzugsweise von 0,1 bis 25 Gew.-% betragen.

Es kann vorteilhaft sein, wenn die erfindungsgemäß eingesetzte Zusammensetzung Zink, vorzugsweise in Form von Zink-Ionen oder Zink-Verbindungen enthält. Bevorzugt enthält die erfindungsgemäß eingesetzte Zusammensetzung Zn(acac)₂. Der Anteil an Zink in der erfindungsgemäßen Zusammensetzung beträgt vorzugsweise von 0,0001 bis 1 Gew.-%, bevorzugt von 0,001 bis 0,5 Gew.-% und besonders bevorzugt von 0,01 bis 0,1 Gew.-% bezogen auf die Gesamtzusammensetzung. Durch das Vorhandensein von Zinkatomen oder -ionen, kann die Bildung und/oder das Auflösen der Bindung zwischen Isocyanat-Gruppe und dem aciden H-Atom der Malonsäureeinheit beeinflusst werden.

Es kann vorteilhaft sein, wenn die erfindungsgemäß eingesetzte Zusammensetzung Titan, vorzugsweise in Form von Titan-Ionen oder Titan-Verbindungen enthält. Das in der erfindungsgemäß eingesetzten Zusammensetzung enthaltene Titan liegt vorzugsweise als organische Titan(IV)-verbindungen, beispielsweise Titan(IV)-alkoholat, Titan(IV)-carboxylat oder Titan(IV)-acetylacetonat vor. Bevorzugt handelt es sich bei der Titan(IV)-verbindung um ein Titan(IV)-alkoholat, wobei es vorteilhaft sein kann, wenn es sich bei dem Liganden um ein zweizähniges Diol handelt. Beispiele bevorzugter Titan(IV)-verbindungen sind Titantetramethanolat, Titantetraethanloat, Titantetrapropylat, Titantetraisopropylat, Titantetra-n-butylat, Titantetra-t-butylat, Titantetraphenylat, Titanoxidacetylacetonat, Titanacetylacetonat sowie Titandialkoholate basierend auf Diolen. Vorzugsweise liegt das Titan nicht als Verbindung vor, die einen Amino-gruppen haltigen Ligand aufweist. Besonders bevorzugt enthält die erfindungsgemäß eingesetzte Zusammensetzung Titan-(IV)-alkoholate, insbesondere Titan-(IV)-butanolat. Der Anteil an Titan in der erfindungsgemäß eingesetzten Zusammensetzung beträgt vorzugsweise von 0,0001 bis 1 Gew.-%, bevorzugt von 0,001 bis 0,5 Gew.-% und besonders bevorzugt von 0,01 bis 0,1 Gew.-% bezogen auf die Gesamtzusammensetzung.

Bei den erfindungsgemäß eingesetzten Zusammensetzungen kann es sich vorzugsweise um einkomponentige oder zweikomponentige, feuchtigkeits- oder strahlenhärtbare oder thermischvernetzende Polyurethanklebstoffe handeln.

Das Verfahren zur Herstellung einer erfindungsgemäß eingesetzten Zusammensetzung zeichnet sich dadurch aus, dass ein Polymer der Formel (la),

Q-(O-C(O)-CR'R"-C(O)-R¹)ₓ (la)

mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren,
R` = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),

   -C(O)-NH-Q' (II)

   mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder -N=C=O Reste oder Reste der Formel (V) aufweist, 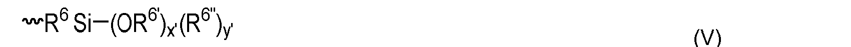
mit R⁶, gleich Kohlenwasserstoffrest, der auch Stickstoff, Schwefel und/oder Sauerstoff aufweisen kann, bevorzugt Kohlenwasserstoffrest der kein Stickstoff, Schwefel oder Sauerstoff aufweist, R^{6'} und R^{6"} gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y' = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
mit der Maßgabe, dass mindestens einer der Reste R` und R" = -H ist,
mit einer Verbindung der Formel (III)

   O=C=N-Q' (III)
mit Q` wie oben definiert, vorzugsweise Q' ein Polyolefin- und/oder Polyester-Rest, vermischt wird.

Handelt es sich bei der Verbindung der Formel (III) um eine solche, bei der Q' ein Rest der Formel (V) ist, so ist diese Verbindung vorzugsweise ausgewählt aus 3-Isocyanatopropyltrimethoxysilan, 3-Isocyanatopropyltriethoxysilan, 3-Isocyanatopropyltriisopropoxysilan, 2- Isocyanatoethyltrimethoxysilan, 2-Isocyanatoethyltriethoxysilan, 2- Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan oder Isocyanatomethytriisopropoxysilan.

Handelt es sich bei der Verbindung der Formel (III) um eine solche, bei der Q' ein Rest der Formel (V) ist, mit R⁶ = Stickstoff, Schwefel und/oder Sauerstoff aufweisender Kohlenwasserstoffrest, so kann es sich dabei z.B. um Verbindungen handeln, die durch Umsetzung von Di- oder Polyisocyanaten mit organofunktionellen Silanen erhalten werden können. Bevorzugte organofunktionelle Silane sind z. B. Aminopropyltrimethoxysilan, Aminopropyltriethoxysilan, N-Methyl-Aminopropyltrimethoxysilan, N-Cyclohexyl-Aminopropyltrimethoxysilan, N-Phenyl-Aminopropyltrimethoxysilan Mercaptopropyltrimethoxysilan oder Mercaptotriethoxysilan.

Vorzugsweise werden jeweils so viel des Polymeren der Formel (I) und der Verbindung der Formel (III) eingesetzt werden, dass das Verhältnis von Resten R' und R", die -H sind, zu Resten O=C=N- der Verbindung (III) von 20 zu 1 bis 1 zu 20, bevorzugt von 5 zu 1 bis 1 zu 5 und besonders bevorzugt von 1 zu 1 bis 1 zu 2 beträgt.

Es kann vorteilhaft sein, wenn der Mischung Zink, vorzugsweise in Form von Zink-Ionen oder Zink-Verbindungen, bevorzugt in Form einer organischen Zink-Verbindung, bevorzugt Zn(acac)₂, als Katalysator zugesetzt wird. Vorzugsweise wird so viel Zink der Mischung zugegeben, dass der Anteil an Zink in der Mischung vorzugsweise von 0,0001 bis 1 Gew.-%, bevorzugt von 0,001 bis 0,5 Gew.-% und besonders bevorzugt von 0,01 bis 0,1 Gew.-% bezogen auf die Mischung beträgt. Durch das Vorhandensein von Zinkatomen oder -ionen, kann die Bildung und/oder das Auflösen der Bindung zwischen Isocyanat-Gruppe und dem aciden H-Atom der Malonsäureeinheit oder des beta-Ketoesters beeinflusst werden.

Das Mischen erfolgt vorzugsweise bei einer Temperatur von größer 70 °C, bevorzugt bei einer Temperatur von 85 bis 160 °C. Besonders bevorzugt wird das Mischen in dem erfindungsgemäßen Verfahren in der Schmelze durchgeführt.

Es kann vorteilhaft sein, das Mischen unter Schutzgasatmosphäre, z. B. einer Edelgas- oder Stickstoffatmosphäre, durchzuführen. Auf diese Weise können ungewollte Reaktionen vermieden werden.

Das Mischen, vorzugsweise unter Schutzgasatmosphäre, wird bevorzugt über einen Zeitraum von 0,1 bis 180 Minuten, bevorzugt von 15 bis 150 Minuten durchgeführt.

Die erfindungsgemäß eingesetzten Zusammensetzungen können zur Verklebung von Substraten verwendet werden. Vorzugsweise handelt es sich bei der Verklebung um eine Verklebung, die (nach Aushärtung) durch eine Wärmebehandlung mit einer Temperatur von 100 °C bis 190 °C lösbar ist.

Die erfindungsgemäß eingesetzten Zusammensetzungen eignen sich in besonderer Weise zur Herstellung von Verklebungen einer Vielzahl von Substraten, z. B. Kunststoffe, faserverstärkte Kunststoffe, Metalle, Holzarten, Glas, Glaskeramik, Beton, Mörtel, Ziegel, steine, Schaumstoffe, Papier, Pappe, insbesondere zur Verklebung von metallischen Substraten, Textilien und diverser Kunststoffe.

Die Art und der Umfang der Verklebung sind dabei nicht limitiert. Vorzugsweise handelt es sich bei den Verklebungen um Verklebungen in der Holz- und Möbelindustrie (beispielsweise Montageverklebung sowie die Kaschierung und Laminierung von Dekorfolien auf Faserplatten), im Automobil- und Transportbereich (beispielsweise Kaschierungen von Folien oder Textilien auf Türseitenteilen, Dachhimmel, die Sitzherstellung, Retainerverklebungen, Montageverklebungen sowie der Herstellung von Sandwichelementen), in der Elekronikindustrie, Bauindustrie (beispielsweise zur Herstellung von Panelen und Türen), in der Schuhindustrie, in der graphischen Industrie und in der Textilindustrie sowie im Fensterbau (beispielsweise zur Profilummantelung). Weiterhin eignen sich die erfindungsgemäß eingesetzten Zusammensetzungen in der Verpackungsindustrie, als Dichtstoffe sowie als Beschichtungsmaterial.

Die erfindungsgemäß eingesetzten Zusammensetzungen eignen sich sowohl für den Einsatz in einkomponentigen als auch in zweikomponentigen Systemen.

Bei den einkomponentigen Klebstoffen erfolgt die Herstellung der Mischung zeitlich unabhängig vom Klebstoffauftrag, üblicherweise zu einem deutlich früheren Zeitpunkt. Nach dem Auftrag des erfindungsgemäßen Klebstoffs erfolgt die Härtung beispielsweise durch Feuchtigkeit oder thermisch induzierte Reaktion der im Klebstoff enthaltenen Reaktionspartner. Bei den zweikomponentigen Klebstoffen wird die Mischung unmittelbar vor Klebstoffauftrag hergestellt.

Die erfindungsgemäß eingesetzten Klebstoff-Formulierungen (Zusammensetzungen) können durch alle bekannten Methoden appliziert werden, z. B. Extruder, Raupe, Düse, Streichen, Tauchen, Spritzen, Gießen, Walzen, Sprühen, Drucken, Wischen, Waschen, Trommeln, Zentrifugieren, Pulver (elektrostatisch).

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### Messmethoden:

### 1. Gelpermeationschromatographie

Das zahlenmittlere und das gewichtsmittlere Molekulargewicht der im Rahmen der vorliegenden Erfindung eingesetzten Polymere wird nach DIN 55672-1 mittels Gelpermeationschromatographie in Tetrahydrofuran als Eluent und Polystyrol zur Kalibrierung bestimmt. Die Polydispersität (U) = Mw/Mn.

### 2. OHZ

Die hergestellten Polymere besitzen Hydroxylgruppen als Endgruppen. Die Konzentration der OH-Gruppen wird nach DIN 53240-2 titrimetrisch in mgKOH / g Polymer bestimmt.

### 3. Viskosität

Die Viskosität der hergestellten Polymere sowie der Umsetzungsprodukte aus Polymer und Diisocyanat wurde in Anlehnung an die DIN EN ISO 3219 mit einem Rotationsviskosimeter in Pa.s bei der jeweils angegeben Temperatur ermittelt.

### 4. NCO-Zahl

Die NCO-Zahl wurde in Anlehnung an die DIN EN 1242 titrimetrisch in Gew-% ermittelt.

### 5. Säurezahl:

Die Konzentration an Säureendgruppen wird nach DIN EN ISO 2114 titrimetrisch in mg KOH / g Polymer bestimmt.

### Eingesetzte Stoffe:

- DYNACOLL 7360: Hydroxyterminierter kristalliner Polyester mit OHZ 30, Tg = -60 °C und Tm = 55 °C der Fa. Evonik Resource Efficiency GmbH, nachfolgend P1 abgekürzt
- Zn(acac)₂: Zink acetylacetonat-Hydrat (108503-47-5) der Merck
- TYTAN^{™} TNBT: Titantetra-n-bu tanolat (5593-70-4) der Borica Co., Ltd
- Diethylmalonat (TCI Deutschland GmbH)
- DESMODUR^{®} 44M: 4,4'-Diphenylmethandiisocyanat (der Fa. Covestro)

### Beispiel 1: Herstellung Malonat-haltiger Polyester (P2, nicht erfindungsgemäß)

3991 g von Polyester P1 werden mit 509 g Diethylmalonat und 2,25 g TYTAN^{™} TNBT als Katalysator in einem 5L Glaskolben mit Destillationsaufsatz unter Stickstoff aufgeschmolzen. Anschließend wurde bei einer Temperatur von 160 °C innerhalb von etwa fünf Stunden entstehendes Ethanol bei Normaldruck abdestilliert. Anschließend wurde bei gleicher Temperatur der Druck in 100 mbar-Schritten auf <10 mbar gesenkt, um nicht reagiertes Diethylmalonat abzudestillieren.

Es wurde ein kristalliner Polyester mit einem Schmelzpunkt (DIN 53765) von 42°C erhalten mit einer Säurezahl <1 mg KOH/g, OHZ von 3,0 mg KOH/g und einem Molekulargewicht von Mn = 3,1 kDa. Mittels NMR wurde gezeigt, dass vornehmlich die Endgruppen des Polyesters P1 funktionalisiert wurden und nur wenig Kettenverlängerung durch das Diethylmalonat stattfand, sodass der Polyester P2 durch die Malonat-Funktionalität mit einer "hypothetischen OHZ" (dient zur Berechnung der Einwaage der NCO-Komponente bei Folgereaktionen) von 30 charakterisiert wurde.

### Beispiel 2: Herstellung NCO-terminiertes Präpolymer (RHM1, nicht erfindungsgemäß)

In einem 500 ml Planschliffkolben wurden 300g P1 bei 100 °C aufgeschmolzen und für 45 Minuten im Vakuum getrocknet. Danach wurden 37,5 g 4,4`-Diphenylmethandiisocyanat (DESMODUR^{®} 44M - Fa. Covestro; OH:NCO 1:2,2) zugegeben und zügig homogenisiert. Zur vollständigen Umsetzung der Reaktionspartner wurde 45 Minuten bei 100 °C unter Schutzgasatmosphäre gerührt. Anschließend wurde das NCO-terminierte Präpolymer (RHM 1) abgefüllt.

### Beispiel 3: Herstellung RHM 2 (erfindungsgemäß)

In einem 500 ml Planschliffkolben wurden 180 g RHM1 bei 100 °C aufgeschmolzen. Danach wurden 0,03 g Zn(acac)₂ und 20 g P2 zugegeben und zügig homogenisiert. Zur vollständigen Umsetzung der Reaktionspartner wurde 60 Minuten bei 100 °C unter Schutzgasatmosphäre gerührt. Anschließend wurde der Reaktivklebstoff (RHM 2) abgefüllt.

### Beispiel 4: Herstellung RHM 3 (erfindungsgemäß)

In einem 500 ml Planschliffkolben wurden 160g RHM1 bei 100 °C aufgeschmolzen. Danach wurden 0,06 g Zn(acac)₂ und 40 g P2 zugegeben und zügig homogenisiert. Zur vollständigen Umsetzung der Reaktionspartner wurde 60 Minuten bei 100 °C unter Schutzgasatmosphäre gerührt. Anschließend wurde der Reaktivklebstoff (RHM 3) abgefüllt.

### Beispiel 5: Herstellung RHM 4 (nicht erfindungsgemäß)

In einem 500 ml Planschliffkolben wurden 160 g RHM1 bei 100 °C aufgeschmolzen. Danach wurde 40 g P1 zugegeben und zügig homogenisiert. Zur vollständigen Umsetzung der Reaktionspartner wurde 40 Minuten bei 100 °C unter Schutzgasatmosphäre gerührt. Anschließend wurde der Reaktivklebstoff (RHM 4) abgefüllt.

### Beispiel 6: Herstellung RHM 5 (erfindungsgemäß)

In einem 500 ml Planschliffkolben wurden 160 g P1 und 40 g P2 bei 100 °C aufgeschmolzen, 0.06 g Zn(acac)₂ zugegeben und 45 Minuten im Vakuum getrocknet. Danach wurden 28,7 g 4,4`-Diphenylmethandiisocyanat (DESMODUR^{®} 44M - Fa. Covestro; OH+ OH hyp / NCO 1:2,2) zugegeben und zügig homogenisiert. Zur vollständigen Umsetzung der Reaktionspartner wurde 45 Minuten bei 100 °C unter Schutzgasatmosphäre gerührt. Anschließend wurde der Reaktivklebstoff (RHM 5) abgefüllt.

### Beispiel 7: Herstellung RHM 6 (erfindungsgemäß)

In einem 500 ml Planschliffkolben wurden 300 g P2 bei 100 °C aufgeschmolzen, 0,45 g Zn(acac)₂ zugegeben und 45 Minuten im Vakuum getrocknet. Danach wurden 44 g 4,4`-Diphenylmethandiisocyanat (DESMODUR^{®} 44M - Fa. Covestro; OH hyp / NCO 1:2,2) zugegeben und zügig homogenisiert. Zur vollständigen Umsetzung der Reaktionspartner wurde 180 Minuten bei 100 °C unter Schutzgasatmosphäre gerührt. Anschließend wurde der Reaktivklebstoff (RHM 6) abgefüllt.

Alle RHM wurden bzgl. der mechanischen Eigenschaften und Wärmestandfestigkeit bewertet. Für die Bestimmung der mechanischen Eigenschaften anhand der Zugfestigkeit nach DIN 53504 wurden Filme mit einer Schichtdicke von ca. 0,5 mm aus dem RHM gezogen und diese für 2 Wochen (W) bei 20 °C bei 65% rel. Luftfeuchtigkeit gelagert. Für die Bestimmung der Wärmestandfestigkeit wurden zwei Buchenholzsubstrate mit einer Länge von 100 mm, einer Breite von 20 mm und einer Dicke von 5 mm in Form eines "T" überlappend verklebt. Die verklebte Fläche betrug 400 mm², die Klebstoffdicke ca. 0,2 mm. Die verklebten Prüfkörper wurden unter gleichen Bedingungen im Klimaschrank gelagert. Anschließend wurde der verklebte Probekörper in ein Gestell eingesetzt, an den langen Schenkel des verklebten Probekörpers wurde ein Gewicht von 400 g gehängt und unter definierten Bedingungen in einem Wärmeschrank bis zum Versagen der Verklebung aufgeheizt. In einem Vorversuch wird die Messung bei einer Temperatur von 50 °C gestartet und dann schrittweise nach jeweils 20 Minuten um 10 °C solange erhöht, bis die Verklebung sich löst und das Gewicht zu Boden fällt. Im Hauptversuch wird die Messung 20 °C unterhalb der höchsten Temperatur des Vorversuchs gestartet, bei der die Verklebung noch gehalten hat. Die Temperatur wird schrittweise nach jeweils 20 Minuten um 5 °C erhöht, bis sich die Verklebung löst und das Gewicht zu Boden fällt. Die Wärmestandfestigkeit ist die höchste Temperatur des Hauptversuchs, bei der die Verklebung noch hält. Die Ergebnisse der Ausprüfungen sind Tabelle 2 zu entnehmen.

**Tabelle 2: Ergebnisse der Ausprüfung der reaktiven Schmelzklebstoffe (RHM) 1 bis 6**

| | RHM 1 | RHM 2 | RHM 3 | RHM 4 | RHM 5 | RHM 6 |
|---|---|---|---|---|---|---|
| NCO-Zahl (%) | 2,4 | 1,8 | 1,4 | 1,5 | 2,4 | 2,2 |
| Zugfestigkeit bei 23 °C (N/mm²) | 21 | 18 | 15 | 12 | 15 | 9 |
| | | | | | | |
| Wärmestandfestigkeit (°C) | > 200 | 175 | 150 | 180 | 175 | 90 |

Es zeigt sich deutlich, dass mit steigendem Anteil Malonat die Wärmestandfestigkeit der ausgehärteten PU-Klebstoffe deutlich herabgesetzt wird. Die mechanischen Eigenschaften vor thermischer Belastung sind hingegen ausreichend hoch.

## Patentansprüche

1. Verfahren zum Verkleben von Substraten, wobei es sich bei der Verklebung um eine Verklebung handelt, die durch eine Wärmebehandlung mit einer Temperatur von 50 °C bis kleiner 200 °C lösbar ist und zur Herstellung der Verklebung eine Zusammensetzung, enthaltend ein Polymer der Formel (I),
Q-(O-C(O)-CR'R"-C(O)-R¹)ₓ (I)
mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen,
R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren, R` = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),
-C(O)-NH-Q` (II)
mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder-N=C=O Reste oder Reste der Formel (V) aufweist, 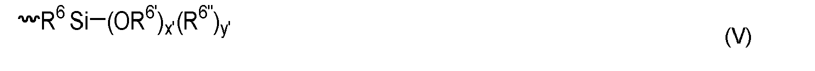
mit R⁶, gleich Kohlenwasserstoffrest, der auch Stickstoff, Schwefel und/oder Sauerstoff aufweisen kann, R^{6'} und R^{6"}gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y` = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
R" = -H oder ein Rest der Formel (II),
mit der Maßgabe, dass wenn keiner der Reste R` und R" ein Rest der Formel (II) ist, mindestens einer der Reste R` oder R" -H ist, eingesetzt wird.

2. Verfahren nach Anspruch 1, **dadurch gekennzeichnet, dass** keiner der Reste R` und R" im Polymer der Formel (I) der Formel (II) entspricht und in der Zusammensetzung eine Verbindung der Formel (III)
O=C=N-Q' (III)
mit Q` wie oben definiert, vorzugsweise Q' ein Polyolefin- und/oder Polyester-Rest, enthalten ist.

3. Verfahren nach Anspruch 1 oder 2, **dadurch gekennzeichnet, dass** Q ein Polyesterrest ist, der bevorzugt auf Di- und/oder Polysäuren und Di- und/oder Polyolen basiert.

4. Verfahren nach einem der Ansprüche 1 bis 3, **dadurch gekennzeichnet, dass** Q ein Polyesterrest ist, der auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1 ,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert.

5. Verfahren nach einem der Ansprüche 1 bis 4, **dadurch gekennzeichnet, dass** R³ ein Polyesterrest ist, der bevorzugt auf Di- und/oder Polysäuren und Di- und/oder Polyolen, besonders bevorzugt auf einer oder mehreren, vorzugsweise einer Polysäure, ausgewählt aus der Gruppe bestehend aus Terephthalsäure, Isophthalsäure, Bernsteinsäure, Adipinsäure, Sebacinsäure, 1,12-Dodecandicarbonsäure und Dimerfettsäuren, und einem oder mehreren, vorzugsweise einem Polyol, ausgewählt aus der Gruppe bestehend aus Ethylenglykol, Propandiol-1 ,3, Butandiol-1,4, Pentandiol-1,5, Hexandiol-1,6, Neopentylglykol, Methylpropandiol-1,3, Trimethylolpropan, Glycerin, Pentaerythrol, Polyethylenglykol und Polypropylenglykol, ganz besonders bevorzugt auf Adipinsäure und Hexandiol basiert.

6. Verfahren nach einem der Ansprüche 1 bis 5, **dadurch gekennzeichnet, dass** mindestens einer der Reste R' und R" im Polymer der Formel (I) der Formel (II) entspricht und in der Zusammensetzung zusätzlich eine Verbindung der Formel (III)
O=C=N-Q' (III)
mit Q` wie oben definiert, vorzugsweise mit Q' ein Polyolefin- und/oder Polyester-Rest, enthalten ist.

7. Verfahren nach einem der Ansprüche 1 bis 5, **dadurch gekennzeichnet, dass** mindestens einer der Reste R` und R" im Polymer der Formel (I) der Formel (II) entspricht und in der Zusammensetzung keine Verbindung der Formel (III)
O=C=N-Q' (III)
mit Q` wie oben definiert, vorzugsweise mit Q' ein Polyolefin- und/oder Polyester-Rest, enthalten ist.

8. Verfahren nach einem der Ansprüche 1 bis 7, **dadurch gekennzeichnet, dass** zur Herstellung der Zusammensetzung, ein Polymer der Formel (la),
Q-(O-C(O)-CR'R"-C(O)-R¹)ₓ (la)
mit
Q = Polymerrest, ausgewählt aus Polyester- und/oder Polyolefinrest, wobei der Polymerrest keine Bausteine enthält, die aus der Verwendung von (Meth)acrylsäure-Einheiten aufweisenden Molekülen als Monomere resultieren,
x größer-gleich 1, vorzugsweise 1 bis 100, bevorzugt 2 bis 20, besonders bevorzugt 3 bis 10,
R¹ = R² oder O-R³,
R² = Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen,
R³ = Kohlenwasserstoffrest, der mit Halogenatomen substituiert sein kann, mit 1 bis 10 Kohlenstoffatomen, vorzugsweise mit 1 bis 7 Kohlenstoffatomen und bevorzugt mit 1 bis 4 Kohlenstoffatomen, oder Polymerrest, vorzugsweise ausgewählt aus Polyester- oder Polyolefinrest, bevorzugt ein Polymerrest, der keine Bausteine enthält, die aus der Verwendung von (Meth)acrylsäure-Einheiten aufweisenden Molekülen als Monomere resultieren, R` = -H, Kohlenwasserstoffrest, der mit Halogenatomen substituiert sein kann, mit 1 bis 10 Kohlenstoffatomen, vorzugsweise 1 bis 7 Kohlenstoffatomen und bevorzugt 1 bis 4 Kohlenstoffatomen, oder ein Rest der Formel (II),
-C(O)-NH-Q` (II)
mit
Q' = organischer Rest, der auch ein oder mehrere Silizium-Atome aufweisen kann, vorzugsweise organischer Rest, der ein oder mehrere -C(O)-NH-Bausteine, -N=C=O Reste oder Reste der Formel (V) aufweist, und bevorzugt Polyester- und/oder Polyolefinrest, der ein oder mehrere -C(O)-NH-Bausteine oder-N=C=O Reste oder Reste der Formel (V) aufweist, 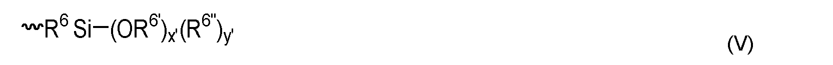
mit R⁶, gleich Kohlenwasserstoffrest, der auch Stickstoff, Schwefel und/oder Sauerstoff aufweisen kann, R^{6'} und R^{6"}gleiche oder verschiedene, gesättigte Kohlenwasserstoffreste, vorzugsweise lineare Kohlenwasserstoffreste, vorzugsweise mit 1 bis 18 Kohlenstoffatomen, bevorzugt mit 1 bis 3 Kohlenstoffatomen, und x' = 0 bis 3, y` = 0 bis 3, mit der Maßgabe, dass x' + y' = 3 ist, und wobei die geschwungene Linie eine kovalenten Bindung zum Stickstoff darstellt, wobei x' >= 2 und y' <= 1 bevorzugt und x' = 3 und y' = 0 besonders bevorzugt ist,
mit der Maßgabe, dass mindestens einer der Reste R` und R" = -H ist,
mit einer Verbindung der Formel (III)
O=C=N-Q' (III)
mit Q` wie oben definiert, vorzugsweise Q' ein Polyolefin- und/oder Polyester-Rest, vermischt wird.

9. Verfahren nach Anspruch 8, **dadurch gekennzeichnet, dass** jeweils so viel des Polymeren der Formel (I) und der Verbindung der Formel (III) eingesetzt werden, dass das Verhältnis von Resten R' und R", die -H sind, zu Resten O=C=N- der Verbindung (III) von 20 zu 1 bis 1 zu 20 beträgt.

10. Verfahren nach einem der Ansprüche 8 oder 9, **dadurch gekennzeichnet, dass** eine organische Zink-Verbindung, bevorzugt Zn(acac)₂, als Katalysator zugesetzt wird.

11. Verfahren nach einem der Ansprüche 8 bis 10, **dadurch gekennzeichnet, dass** das Mischen bei einer Temperatur von größer 70 °C, bevorzugt bei einer Temperatur von 85 bis 160 °C erfolgt.

12. Verfahren nach mindestens einem der Ansprüche 8 bis 11, **dadurch gekennzeichnet, dass** das Mischen unter Schutzgasatmosphäre, bevorzugt über einen Zeitraum von 0,1 bis 180 Minuten, bevorzugt 15 bis 150 Minuten durchgeführt wird.

13. Verfahren nach mindestens einem der Ansprüche 8 bis 12, **dadurch gekennzeichnet, dass** das Mischen in der Schmelze durchgeführt wird.

14. Verfahren nach einem der Ansprüche 1 bis 13, **dadurch gekennzeichnet, dass** es sich bei der Verklebung um eine Verklebung handelt, die durch eine Wärmebehandlung mit einer Temperatur von 100 °C bis 190 °C, lösbar ist.

## Claims

1. Method for bonding substrates, wherein the bonding is an adhesive bond which is separable by a heat treatment at a temperature of 50°C to less than 200°C and, for preparing the adhesive bond, a composition comprising a polymer of the formula (I),
Q-(O-C(O)-CR'R"-C(O)-R¹)ₓ (I)
with
Q = polymer radical selected from polyester and/or polyolefin radical, wherein the polymer radical contains no building blocks resulting from the use, as monomers, of molecules having (meth)acrylic acid units,
x is greater than or equal to 1, preferentially 1 to 100, preferably 2 to 20, particularly preferably 3 to 10,
R¹ = R² or O-R³,
R² = hydrocarbon radical which may be substituted with halogen atoms, having 1 to 10 carbon atoms, preferentially 1 to 7 carbon atoms and preferably 1 to 4 carbon atoms,
R³ = hydrocarbon radical which may be substituted with halogen atoms, having 1 to 10 carbon atoms, preferentially having 1 to 7 carbon atoms and preferably having 1 to 4 carbon atoms, or polymer radical, preferentially selected from polyester or polyolefin radical, preferably a polymer radical which contains no building blocks resulting from the use, as monomers, of molecules having (meth)acrylic acid units,
R' = -H, hydrocarbon radical which may be substituted with halogen atoms, having 1 to 10 carbon atoms, preferentially 1 to 7 carbon atoms and preferably 1 to 4 carbon atoms, or a radical of the formula (II),
-C(O)-NH-Q' (II)
with
Q' = organic radical which may also have one or more silicon atoms, preferentially organic radical which has one or more -C(O)-NH building blocks, -N=C=O radicals or radicals of the formula (V), and preferably polyester and/or polyolefin radical which has one or more -C(O)-NH building blocks or -N=C=O radicals or radicals of the formula (V), 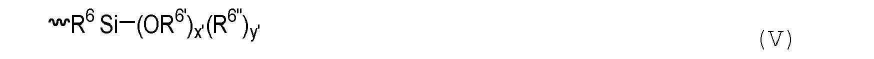
with R⁶ being a hydrocarbon radical which may also have nitrogen, sulfur and/or oxygen, R^{6'} and R^{6"} being identical or different saturated hydrocarbon radicals, preferentially linear hydrocarbon radicals, preferentially having 1 to 18 carbon atoms, preferably having 1 to 3 carbon atoms, and x' = 0 to 3, y' = 0 to 3, with the proviso that x' + y' = 3, and wherein the wavy line is a covalent bond to the nitrogen, wherein x' >= 2 and y' <= 1 is preferable and x' = 3 and y' = 0 is particularly preferable,
R" = -H or a radical of the formula (II),
with the proviso that, if neither of the radicals R' and R" is a radical of the formula (II), at least one of the radicals R' or R" is -H, is used.

2. Method according to Claim 1, **characterized in that** neither of the radicals R' and R" in the polymer of the formula (I) corresponds to the formula (II) and the composition contains a compound of the formula (III)
O=C=N-Q' (III)
with Q' as defined above, preferentially Q' being a polyolefin and/or polyester radical.

3. Method according to Claim 1 or 2, **characterized in that** Q is a polyester radical which is preferably based on diacids and/or polyacids and diols and/or polyols.

4. Method according to one of Claims 1 to 3, **characterized in that** Q is a polyester radical which is based on one or more, preferentially one, polyacid, selected from the group consisting of terephthalic acid, isophthalic acid, succinic acid, adipic acid, sebacic acid, 1,12-dodecanedicarboxylic acid and dimer fatty acids, and one or more, preferentially one, polyol, selected from the group consisting of ethylene glycol, propane-1,3-diol, butane-1,4-diol, pentane-1,5-diol, hexane-1,6-diol, neopentyl glycol, methylpropane-1,3-diol, trimethylolpropane, glycerol, pentaerythritol, polyethylene glycol and polypropylene glycol, very particularly preferably on adipic acid and hexanediol.

5. Method according to one of Claims 1 to 4, **characterized in that** R³ is a polyester radical which is preferably based on diacids and/or polyacids and diols and/or polyols, particularly preferably on one or more, preferentially one, polyacid, selected from the group consisting of terephthalic acid, isophthalic acid, succinic acid, adipic acid, sebacic acid, 1,12-dodecanedicarboxylic acid and dimer fatty acids, and one or more, preferentially one, polyol, selected from the group consisting of ethylene glycol, propane-1,3-diol, butane-1,4-diol, pentane-1,5-diol, hexane-1,6-diol, neopentyl glycol, methylpropane-1,3-diol, trimethylolpropane, glycerol, pentaerythritol, polyethylene glycol and polypropylene glycol, very particularly preferably on adipic acid and hexanediol.

6. Method according to one of Claims 1 to 5, **characterized in that** at least one of the radicals R' and R" in the polymer of the formula (I) corresponds to the formula (II) and the composition additionally contains a compound of the formula (III)
O=C=N-Q' (III)
with Q' as defined above, preferentially with Q' being a polyolefin and/or polyester radical.

7. Method according to one of Claims 1 to 5, **characterized in that** at least one of the radicals R' and R" in the polymer of the formula (I) corresponds to the formula (II) and the composition does not contain any compound of the formula (III)
O=C=N-Q' (III)
with Q' as defined above, preferentially with Q' being a polyolefin and/or polyester radical.

8. Method according to one of Claims 1 to 7, **characterized in that**, for preparing the composition, a polymer of the formula (Ia),
Q-(O-C(O)-CR'R"-C(O)-R¹)ₓ (Ia)
with
Q = polymer radical selected from polyester and/or polyolefin radical, wherein the polymer radical contains no building blocks resulting from the use, as monomers, of molecules having (meth)acrylic acid units,
x is greater than or equal to 1, preferentially 1 to 100, preferably 2 to 20, particularly preferably 3 to 10,
R¹ = R² or O-R³,
R² = hydrocarbon radical which may be substituted with halogen atoms, having 1 to 10 carbon atoms, preferentially 1 to 7 carbon atoms and preferably 1 to 4 carbon atoms,
R³ = hydrocarbon radical which may be substituted with halogen atoms, having 1 to 10 carbon atoms, preferentially having 1 to 7 carbon atoms and preferably having 1 to 4 carbon atoms, or polymer radical, preferentially selected from polyester or polyolefin radical, preferably a polymer radical which contains no building blocks resulting from the use, as monomers, of molecules having (meth)acrylic acid units,
R' = -H, hydrocarbon radical which may be substituted with halogen atoms, having 1 to 10 carbon atoms, preferentially 1 to 7 carbon atoms and preferably 1 to 4 carbon atoms, or a radical of the formula (II),
-C(O)-NH-Q' (II)
with
Q' = organic radical which may also have one or more silicon atoms, preferentially organic radical which has one or more -C(O)-NH building blocks, -N=C=O radicals or radicals of the formula (V), and preferably polyester and/or polyolefin radical which has one or more -C(O)-NH building blocks or -N=C=O radicals or radicals of the formula (V), 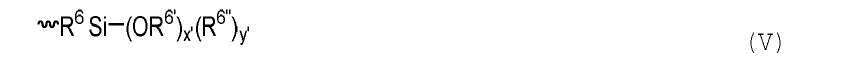
with R⁶ being a hydrocarbon radical which may also have nitrogen, sulfur and/or oxygen, R^{6'} and R^{6"} being identical or different saturated hydrocarbon radicals, preferentially linear hydrocarbon radicals, preferentially having 1 to 18 carbon atoms, preferably having 1 to 3 carbon atoms, and x' = 0 to 3, y' = 0 to 3, with the proviso that x' + y' = 3, and wherein the wavy line is a covalent bond to the nitrogen, wherein x' >= 2 and y' <= 1 is preferable and x' = 3 and y' = 0 is particularly preferable,
with the proviso that at least one of the radicals R' and R" = -H,
is mixed with a compound of the formula (III)
O=C=N-Q' (III)
with Q' as defined above, preferentially Q' being a polyolefin and/or polyester radical.

9. Method according to Claim 8, **characterized in that** in each case amounts of the polymer of the formula (I) and the compound of the formula (III) are used such that the ratio of radicals R' and R" which are -H to radicals O=C=N- of the compound (III) is from 20 to 1 to 1 to 20.

10. Method according to either of Claims 8 and 9, **characterized in that** an organic zinc compound, preferably Zn(acac)₂, is added as catalyst.

11. Method according to one of Claims 8 to 10, **characterized in that** the mixing is carried out at a temperature of greater than 70°C, preferably at a temperature of 85 to 160°C.

12. Method according to at least one of Claims 8 to 11, **characterized in that** the mixing is carried out under a protective gas atmosphere, preferably over a period of time of 0.1 to 180 minutes, preferably 15 to 150 minutes.

13. Method according to at least one of Claims 8 to 12, **characterized in that** the mixing is carried out in the melt.

14. Method according to one of Claims 1 to 13, **characterized in that** the bonding is an adhesive bond which is separable by a heat treatment at a temperature of 100°C to 190°C.

## Revendications

1. Procédé pour le collage de substrats, dans lequel pour ce qui est du collage il s'agit d'un collage qui est détachable par un traitement thermique à une température de 50 °C à moins de 200 °C et pour la production du collage est utilisée une composition contenant un polymère de formule (I),
Q-(O-C(O)-CR'R"-C(O)-R¹)ₓ (I)
où
Q = résidu de polymère, choisi parmi un résidu de polyester et/ou de polyoléfine, le résidu de polymère ne contenant pas de composants qui résultent de l'utilisation de molécules comportant des unités acide (méth)acrylique, en tant que monomères,
x est supérieur ou égal à 1, de préférence de 1 à 100, préférablement de 2 à 20, de façon particulièrement préférée de 3 à 10,
R¹ = R² ou O-R³,
R² = radical hydrocarboné, qui peut être substitué par des atomes d'halogène, ayant de 1 à 10 atomes de carbone, de préférence de 1 à 7 atomes de carbone et préférablement de 1 à 4 atomes de carbone,
R³ = radical hydrocarboné, qui peut être substitué par des atomes d'halogène, ayant de 1 à 10 atomes de carbone, de préférence ayant de 1 à 7 atomes de carbone et préférablement ayant de 1 à 4 atomes de carbone, ou résidu de polymère, de préférence choisi parmi un résidu de polyester ou de polyoléfine, préférablement un résidu de polymère, qui ne contient pas de composants qui résultent de l'utilisation de molécules comportant des unités acide (méth)acrylique, en tant que monomères,
R' = -H, radical hydrocarboné, qui peut être substitué par des atomes d'halogène, ayant de 1 à 10 atomes de carbone, de préférence de 1 à 7 atomes de carbone et préférablement de 1 à 4 atomes de carbone, ou un radical de formule (II),
-C(O)-NH-Q' (II)
où
Q' = radical organique, qui peut également comporter un ou plusieurs atomes de silicium, de préférence radical organique qui comporte un ou plusieurs composants -C(O)-NH, radicaux -N=C=O ou radicaux de formule (V), et de préférence résidu de polyester et/ou de polyoléfine, qui comporte un ou plusieurs composants -C(O)-NH ou radicaux -N=C=O ou radicaux de formule (V), 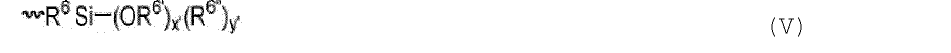
où R⁶ représente un radical hydrocarboné qui peut également comporter des atomes d'azote, de soufre et/ou d'oxygène, R^{6'} et R^{6"} représentent des radicaux hydrocarbonés saturés, identiques ou différents, de préférence des radicaux hydrocarbonés linéaires, ayant de préférence de 1 à 18 atomes de carbone, préférablement de 1 à 3 atomes de carbone, et x' = 0 à 3, y' = 0 à 3, étant entendu que x' + y' = 3, et le trait ondulé représentant une liaison covalente à l'azote, x' ≥ 2 et y' ≤ 1 étant préférés et x' = 3 et y' = 0 étant particulièrement préférés,
R" = -H ou un radical de formule (II),
étant entendu que lorsqu'aucun des radicaux R' et R" n'est un radical de formule (II), au moins l'un des radicaux R' et R" est -H.

2. Procédé selon la revendication 1, **caractérisé en ce qu'**aucun des radicaux R' et R" dans le polymère de formule (I) ne correspond à la formule (II) et dans la composition est contenu un composé de formule (III) O=C=N-Q' (III) où Q' est tel que défini plus haut, de préférence Q' est un résidu de polyoléfine et/ou de polyester.

3. Procédé selon la revendication 1 ou 2, **caractérisé en ce que** Q est un résidu de polyester, qui est de préférence à base de diacides et/ou polyacides et de diols et/ou polyols.

4. Procédé selon l'une des revendications 1 à 3, **caractérisé en ce que** Q est un résidu de polyester qui est à base d'un ou de plusieurs polyacides, de préférence d'un polyacide, choisis dans le groupe constitué par l'acide téréphtalique, l'acide isophtalique, l'acide succinique, l'acide adipique, l'acide sébacique, l'acide 1,12-dodécanedicarboxylique et les acides gras dimères, et d'un ou de plusieurs polyols, de préférence d'un polyol, choisis dans le groupe constitué par l'éthylèneglycol, le propanediol-1,3, le butanediol-1,4, le pentanediol-1,5, l'hexanediol-1,6, le néopentylglycol, le méthylpropanediol-1,3, le triméthylolpropane, le glycérol, le pentaérythritol, le polyéthylèneglycol et le polypropylèneglycol, de façon tout particulièrement préférée à base d'acide adipique et d'hexanediol.

5. Procédé selon l'une des revendications 1 à 4, **caractérisé en ce que** R³ est un résidu de polyester qui est de préférence à base de diacides et/ou polyacides et de diols et/ou polyols, de façon particulièrement préférée à base d'un ou de plusieurs polyacides, de préférence d'un polyacide, choisis dans le groupe constitué par l'acide téréphtalique, l'acide isophtalique, l'acide succinique, l'acide adipique, l'acide sébacique, l'acide 1,12-dodécanedicarboxylique et les acides gras dimères, et d'un ou de plusieurs polyols, de préférence d'un polyol, choisis dans le groupe constitué par l'éthylèneglycol, le propanediol-1,3, le butanediol-1,4, le pentanediol-1,5, l'hexanediol-1,6, le néopentylglycol, le méthylpropanediol-1,3, le triméthylolpropane, le glycérol, le pentaérythritol, le polyéthylèneglycol et le polypropylèneglycol, de façon tout particulièrement préférée à base d'acide adipique et d'hexanediol.

6. Procédé selon l'une des revendications 1 à 5, **caractérisé en ce qu'**au moins l'un des radicaux R' et R" dans le polymère de formule (I) correspond à la formule (II) et dans la composition est en outre contenu un composé de formule (III)
O=C=N-Q' (III)
où Q' est tel que défini plus haut, de préférence où Q' est un résidu de polyoléfine et/ou de polyester.

7. Procédé selon l'une des revendications 1 à 5, **caractérisé en ce qu'**au moins l'un des radicaux R' et R" dans le polymère de formule (I) correspond à la formule (II) et dans la composition n'est contenu aucun composé de formule (III)
O=C=N-Q' (III)
où Q' est tel que défini plus haut, de préférence où Q' est un résidu de polyoléfine et/ou de polyester.

8. Procédé selon l'une des revendications 1 à 7, **caractérisé en ce que** pour la préparation de la composition on mélange un polymère de formule (Ia)
Q-(O-C(O)-CR'R"-C(O)-R¹)ₓ (Ia)
où
Q = résidu de polymère, choisi parmi un résidu de polyester et/ou de polyoléfine, le résidu de polymère ne contenant pas de composants qui résultent de l'utilisation de molécules comportant des unités acide (méth)acrylique, en tant que monomères,
x est supérieur ou égal à 1, de préférence de 1 à 100, préférablement de 2 à 20, de façon particulièrement préférée de 3 à 10,
R¹ = R² ou O-R³,
R² = radical hydrocarboné, qui peut être substitué par des atomes d'halogène, ayant de 1 à 10 atomes de carbone, de préférence de 1 à 7 atomes de carbone et préférablement de 1 à 4 atomes de carbone,
R³ = radical hydrocarboné, qui peut être substitué par des atomes d'halogène, ayant de 1 à 10 atomes de carbone, de préférence ayant de 1 à 7 atomes de carbone et préférablement ayant de 1 à 4 atomes de carbone, ou résidu de polymère, de préférence choisi parmi un résidu de polyester ou de polyoléfine, préférablement un résidu de polymère, qui ne contient pas de composants qui résultent de l'utilisation de molécules comportant des unités acide (méth)acrylique, en tant que monomères,
R' = -H, radical hydrocarboné, qui peut être substitué par des atomes d'halogène, ayant de 1 à 10 atomes de carbone, de préférence de 1 à 7 atomes de carbone et préférablement de 1 à 4 atomes de carbone, ou un radical de formule (II),
-C(O)-NH-Q' (II)
où
Q' = radical organique, qui peut également comporter un ou plusieurs atomes de silicium, de préférence radical organique qui comporte un ou plusieurs composants -C(O)-NH, radicaux -N=C=O ou radicaux de formule (V), et de préférence résidu de polyester et/ou de polyoléfine, qui comporte un ou plusieurs composants -C(O)-NH ou radicaux -N=C=O ou radicaux de formule (V), 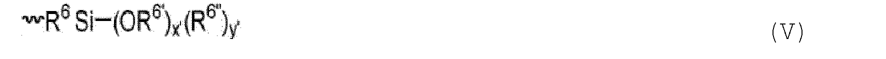
où R⁶ représente un radical hydrocarboné qui peut également comporter des atomes d'azote, de soufre et/ou d'oxygène, R^{6'} et R^{6"} représentent des radicaux hydrocarbonés saturés, identiques ou différents, de préférence des radicaux hydrocarbonés linéaires, ayant de préférence de 1 à 18 atomes de carbone, préférablement de 1 à 3 atomes de carbone, et x' = 0 à 3, y' = 0 à 3, étant entendu que x' + y' = 3, et le trait ondulé représentant une liaison covalente à l'azote, x' ≥ 2 et y' ≤ 1 étant préférés et x' = 3 et y' = 0 étant particulièrement préférés,
étant entendu qu'au moins l'un des radicaux R' et R" est -H,
avec un composé de formule (III)
O=C=N-Q' (III)
où Q' est tel que défini plus haut, de préférence Q' est un résidu de polyoléfine et/ou de polyester.

9. Procédé selon la revendication 8, **caractérisé en ce que** sont utilisés autant de chacun du polymère de formule (I) et du composé de formule (III) pour que le rapport des radicaux R' et R", qui sont -H, aux radicaux O=C=N- du composé (III) vaille de 20 : 1 à 1 : 20.

10. Procédé selon l'une des revendications 8 et 9, **caractérisé en ce qu'**un composé organique de zinc, de préférence Zn(acac)₂ est ajouté en tant que catalyseur.

11. Procédé selon l'une des revendications 8 à 10, **caractérisé en ce que** le mélange s'effectue à une température de plus de 70 °C, de préférence à une température de 85 à 160 °C.

12. Procédé selon au moins une des revendications 8 à 11, **caractérisé en ce que** le mélange est effectué sous atmosphère de gaz protecteur, de préférence pendant une durée de 0,1 à 180 minutes, de préférence 15 à 150 minutes.

13. Procédé selon au moins une des revendications 8 à 12, **caractérisé en ce que** le mélange est effectué dans la masse fondue.

14. Procédé selon l'une des revendications 1 à 13, **caractérisé en ce que** pour ce qui est du collage il s'agit d'un collage qui est détachable par un traitement thermique à une température de 100 °C à 190 °C.
